# FASCICULE DE BREVET EUROPEEN

(11) **EP 2 836 413 B1**
(45) Date de publication et mention de la délivrance du brevet: **28.06.2017**
(21) Numéro de dépôt: 13725183.1
(22) Date de dépôt: 12.04.2013
(51) Int. Cl.: B62B 5/00, B60D 5/00, B62D 49/06, B62D 51/04, B62D 53/02

(54) **VÉHICULE DE TRANSPORT OU PORTE-OUTIL ARTICULE AVEC CONDUITE AU SOL**
SCHWENKBARER WAGEN ODER WERKZEUGSTRÄGER WOBEI DER FAHRER AM BODEN STEHT
ARTUCULATED VEHICLE TOOL CARRIAGE OPERATED BY A WALKING USER

(30) Priorité: 13.04.2012 FR 1201103
(43) Date de publication de la demande: 18.02.2015
(73) Titulaire: Gobard, Benoît, 77120 Aulnoy (FR)
(72) Inventeur: Gobard, Benoît, 77120 Aulnoy (FR)
(74) Mandataire: Marconnet, Sébastien
(86) Numéro de dépôt international: PCT/FR2013/000099
(87) Numéro de publication internationale: WO 2013/153295

(56) Documents cités:
- US-A1- 2004 262 052
- US-B1- 6 488 291

## Description

### DOMAINE TECHNIQUE DE L'INVENTION

L'invention concerne un véhicule de transport ou porte-outil articulé guidé par un opérateur situé au sol.

L'invention peut notamment prendre la forme d'un des véhicules de conduite au sol suivants: une brouette, un chariot, un tombereau de chantier, un porte pot de pépinière, un transpalette, un porte-outil permettant d'élever les outils par rapport du sol , une machine agricole pour le travail du sol, un distributeur d'aliment pour le bétail.

### ETAT DE LA TECHNIQUE

Il existe deux grandes classes de véhicules motorisés conduits par un opérateur à terre. On connaît ainsi des véhicules à châssis rigide comportant un seul châssis orienté par l'action physique de l'opérateur situé à terre. Ces véhicules sont le plus souvent composés d'un essieu moteur rigide et d'une ou de deux roues libres de direction.

L'autre classe de véhicules motorisés avec conduite à terre est celle des véhicules avec un châssis articulé permettant de diriger le véhicule. Ces véhicules comportent généralement deux châssis reliés par un pivot vertical permettant l'articulation du véhicule. L'articulation du véhicule permet de guider l'ensemble du véhicule et de définir une direction lors de ses déplacements. Le mouvement de l'articulation est effectué par la force de l'opérateur situé à terre qui oriente l'un des deux châssis ou animé par un mouvement mécanique.

La plupart des véhicules motorisés à châssis articulés ont un châssis motorisé recevant le système de transmission qui permet l'avancement du véhicule, l'autre châssis étant réservé à la fonction particulière du véhicule.

Dans le cas d'un transpalette décrit dans le document FR2796890 la motorisation est assurée par une roue motorisée montée sur un châssis relié à un autre châssis permettant le transport ou le déplacement de palette. La fonction manutention est donc réalisée par un châssis tandis que la fonction motorisation est réalisée par l'autre châssis.

On connaît également un motoculteur à conduite à terre équipé d'une remorque, le motoculteur et la remorque formant un véhicule. Le motoculteur assure la motricité du véhicule, tandis que la remorque assure la fonction transport. L'axe pivot de l'attelage peut être considéré comme l'articulation entre deux châssis qui permet de diriger l'ensemble. Ce principe d'articulation entre deux châssis est également décrit dans le document FR2669319 suivant lequel un châssis moteur pousse un châssis porteur prenant dans ce cas la forme d'un transpalette tout terrain. Les deux châssis sont reliés par un axe d'articulation.

Le document USD572730 décrit un porte-outil compact destiné au transport et à la manutention équipé d'un châssis moteur qui peut recevoir différentes formes de dispositifs destinés à recevoir des équipements de transport ou de manutention. La commande de ce chariot peut se faire à la fois par un opérateur embarqué ou à terre commandant le véhicule depuis le châssis moteur.

Dans toutes les configurations de véhicules de transport de charge ou de manutention précitées, l'opérateur dirige le véhicule en dirigeant depuis le sol le châssis moteur par l'intermédiaire d'un guidon ou d'un timon. On choisit généralement le guidage du châssis moteur pour des raisons de maniabilités, de simplicité de commande et de contrôle de l'élément moteur. Lors des phases de transport l'opérateur se situe du côté du timon, donnant la direction à l'ensemble et ouvrant la voie au véhicule de transport. Pour des opérations éventuelles de chargement du châssis porteur l'opérateur se trouve derrière le véhicule et manoeuvre l'ensemble en manipulant uniquement l'élément de guidage raccordé au châssis moteur.

Toutefois, dans certaines applications dans lesquelles il est nécessaire d'effectuer un chargement de précision ou en force par l'avant et de transporter ce chargement avec le châssis porteur en avant du véhicule, ou de contrôler un outil dont l'application se réalise devant le véhicule, la conduite par le châssis moteur n'est pas adaptée.

Des engins ou véhicules de transport articulés sont dirigés par l'intermédiaire d'un élément de guidage tel un timon ou un guidon fixé au châssis porteur. Le véhicule est donc plus maniable dans le sens d'un avancement vers le châssis porteur. Dans ce cas, le châssis moteur qui assure l'avancement n'est plus contrôlé directement par l'opérateur au moyen d'un timon ou d'un guidon mais en jouant sur l'articulation entre le châssis porteur et le châssis moteur en dirigeant le châssis porteur.

Ces engins ou véhicules de transport comme par exemple dans le cas du document US20040262052A1 qui décrit un sulky à propulsion avec conducteur embarqué, pour lequel le conducteur peut éventuellement conduire le véhicule au sol sont composés d'une articulation centrale qui permet la direction de l'engin mais n'ont pas un système d'oscillation entre les deux châssis ou un système d'oscillation d'un des deux ponts qui permettent de maintenir en permanence les quatre roues au sol. Cet invention sous entend que le système de propulsion est constitué d'un arbre de transmission unique sur lequel est fixé les deux roues à chaque extrémité. Sans cet arbre de transmission unique, si la machine était équipée d'une transmission équipée d'un différentiel elle s'arrêterait lorsqu'une des deux roues du châssis moteur se trouverait décollée du sol.

Ces engins ou véhicules de transport ont l'inconvénient d'être soumis a des effets indésirables lorsque le châssis porteur rencontre un obstacle ou des irrégularités au sol qui tendent à mettre en mouvement l'articulation du véhicule et donc à provoquer un changement de direction que l'opérateur doit contenir en tenant le guidon ou le timon.

### OBJET DE L'INVENTION

L'invention a pour but de remédier aux inconvénients d'un véhicule de transport articulé avec conducteur au sol avec contrôle du châssis porteur situé à l'avant du véhicule par un élément de guidage et en laissant le châssis moteur situé à l'arrière assurer la motricité du véhicule tout en remédiant aux effets indésirables lors de la rencontre d'un obstacle ou d'irrégularités du sol et en permettant l'utilisation de transmission utilisant un différentiel ou un système de roue(s) libre(s) pour faciliter les changements de trajectoire ou pour réaliser les trajectoires formant une courbe.

Un tel principe qui pourrait à première vue paraître mécaniquement inadapté permet en fait un meilleur contrôle du véhicule et de son chargement ou de l'outil par l'opérateur en marche-avant, c'est à dire vers l'avant du véhicule. Le véhicule est d'une grande maniabilité et facile d'utilisation si la réalisation de l'invention prend en compte des principes de réalisations limitant les effets indésirables sur l'articulation du véhicule.

L'invention concerne donc un véhicule de transport selon la revendication 1.

Selon une réalisation, l'axe d'articulation est incliné par rapport à la verticale vers l'axe d'oscillation dans un plan vertical, longitudinal et médian du véhicule.

Selon l'invention, l'essieu moteur est équipé d'un système permettant à chacune des roues portées par l'essieu moteur d'avancer à des vitesses différentes voire d'être en contre-rotations.

Selon une réalisation, le système permettant à chacune des roues portées par l'essieu moteur d'avancer à des vitesses différentes voire d'être en contre-rotation est un différentiel situé dans l'essieu moteur ou, un système à roue libre situé dans les roues ou dans l'essieu moteur.

Selon une réalisation un système de frein vient bloquer ou limiter le couple du mouvement d'articulation des deux châssis autour de l'axe d'articulation.

Selon une réalisation, l'amortisseur est apte à limiter le débattement de l'articulation dans les deux sens de rotation des deux châssis l'un par rapport à l'autre autour de l'axe d'articulation.

Selon une réalisation, un système de butée limite dans un plan horizontal l'oscillation des deux châssis l'un par rapport à l'autre dans les deux sens de déplacement autour de l'axe d'oscillation.

Selon une réalisation, le système d'oscillation est situé sur le châssis porteur et le système d'articulation sur le châssis moteur. Les deux châssis étant reliés par un bras permettant à la fois l'articulation et l'oscillation.

Selon une réalisation, le châssis porteur comporte un essieu motorisé ou des roues motorisées en complément de la motricité des roues du châssis moteur.

Selon une réalisation, l'articulation entre le bras et l'un des châssis autour de l'axe d'articulation, est formée par un système à pivot comportant une partie formant un axe reliée à une extrémité du bras coopérant avec une partie formant une chape reliée à un des châssis, ou inversement.

Selon une réalisation, l'articulation est formée par au moins deux biellettes liées par leurs extrémités au châssis porteur et au châssis moteur en rotation autour d'axes verticaux.

Selon une réalisation, le véhicule comporte un système de deux bras oscillants l'un par rapport à l'autre reliés à un système de différentiel, ce système équipant le châssis porteur ou le châssis moteur afin de maintenir les roues du véhicule au sol.

Selon une réalisation, l'élément de guidage fixé au châssis porteur comporte un système de réglage permettant de positionner l'élément de guidage indifféremment derrière, devant ou sur le côté du véhicule.

Selon une réalisation, un système de câblage ou de télécommande entre le châssis porteur et le châssis moteur permet le contrôle d'un moteur du châssis moteur depuis l'élément de guidage.

Selon une réalisation, l'articulation est équipée d'un élément de mise en mouvement de l'articulation des deux châssis contrôlé par un élément de contrôle porté par l'élément de guidage.

Selon une réalisation, l'axe d'articulation croise l'axe d'oscillation sensiblement à équidistance des axes de roues respectifs à chaque châssis.

Selon une réalisation, le véhicule comporte un ou plusieurs marchepieds fixés au châssis moteur pour que l'opérateur puisse alternativement passer d'une position au sol à une position embarquée sur le véhicule de transport.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La Figure 1 montre une vue en perspective d'un véhicule selon l'invention équipé d'un système de chargement au sol;
La Figure 2 montre une variante de réalisation de l'articulation entre le châssis porteur et le châssis moteur munie d'un système à biellettes;
Les Figures 3a-3b montrent respectivement une vue en perspective et une vue de haut d'un véhicule selon l'invention simplifiée dans lequel le dispositif de maintien de charge du châssis porteur n'a pas été représenté;
La Figure 4 montre un véhicule selon l'invention prenant la forme d'un transpalette comportant un système de réglage de l'élément de guidage;
La Figure 5 montre un véhicule selon l'invention comportant un châssis porteur comportant un double essieu rigide;
La Figure 6 montre le détail du bras faisant la jonction entre le châssis porteur et le châssis moteur et montre également un système de blocage de l'articulation par un frein à disque;
La Figure 7 montre un véhicule selon l'invention portant un outil de type bineuse;

Les éléments identiques, similaires ou analogues conservent la même référence d'une figure à l'autre.

### DESCRIPTION D'EXEMPLES DE REALISATION DE L'INVENTION

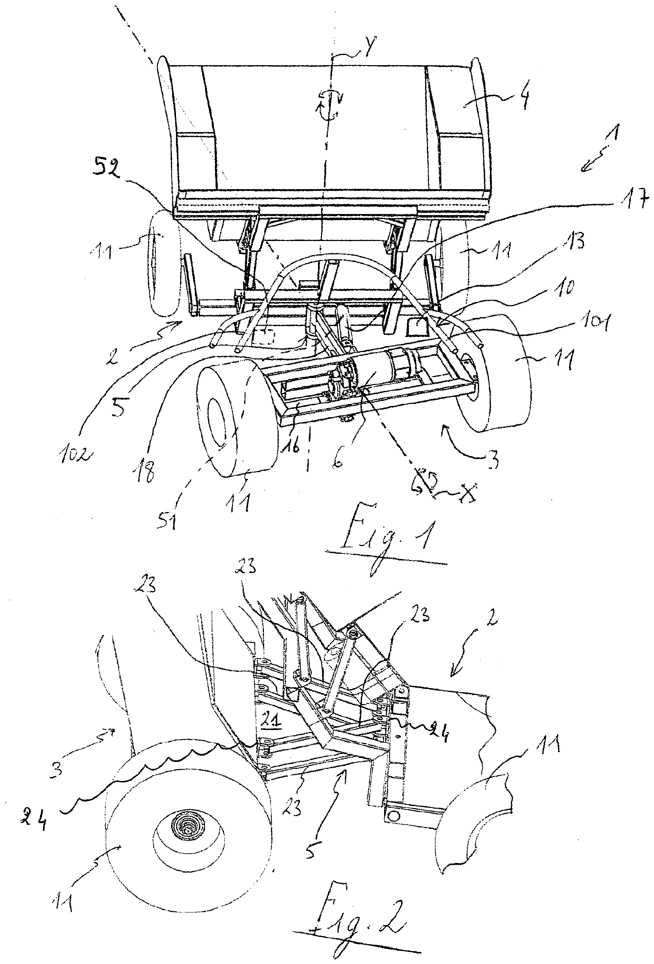

Comme montré sur la Figure 1, le véhicule 1 de transport comporte un châssis porteur 2 situé à l'avant du véhicule apte à recevoir un dispositif 4 de maintien de charge ou un outil, et un châssis moteur 3 situé à l'arrière du véhicule assurant la propulsion du véhicule. Un bras 18 situé entre le châssis moteur 3 et le châssis porteur 2 est joint au châssis porteur 2 par un système d'articulation 5 et au châssis moteur par un système d'oscillation 20. Un élément de guidage 10 fixé au châssis porteur 2 permet à un opérateur au sol (non représenté) de guider le véhicule. Les termes "avant" et "arrière" sont entendus par rapport au sens de déplacement du véhicule.

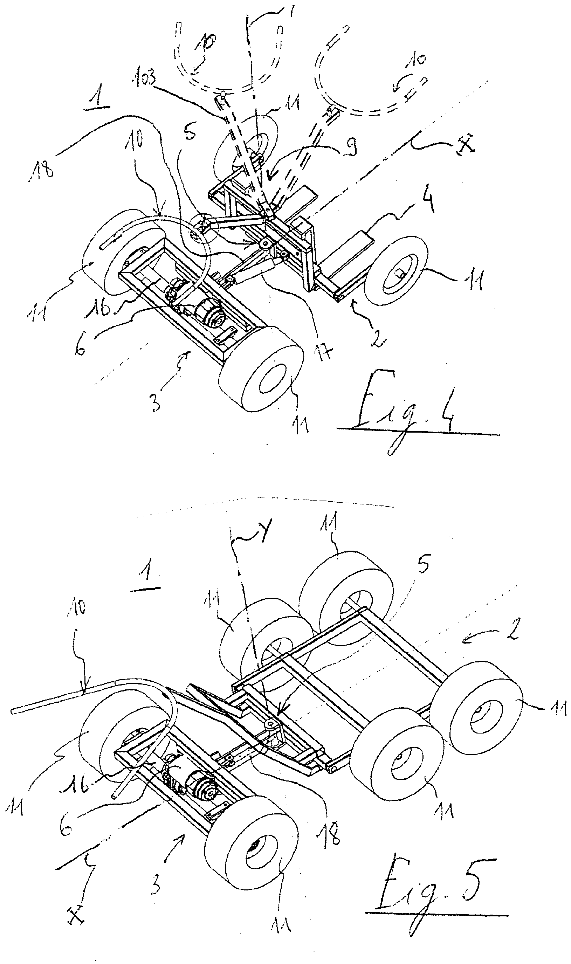

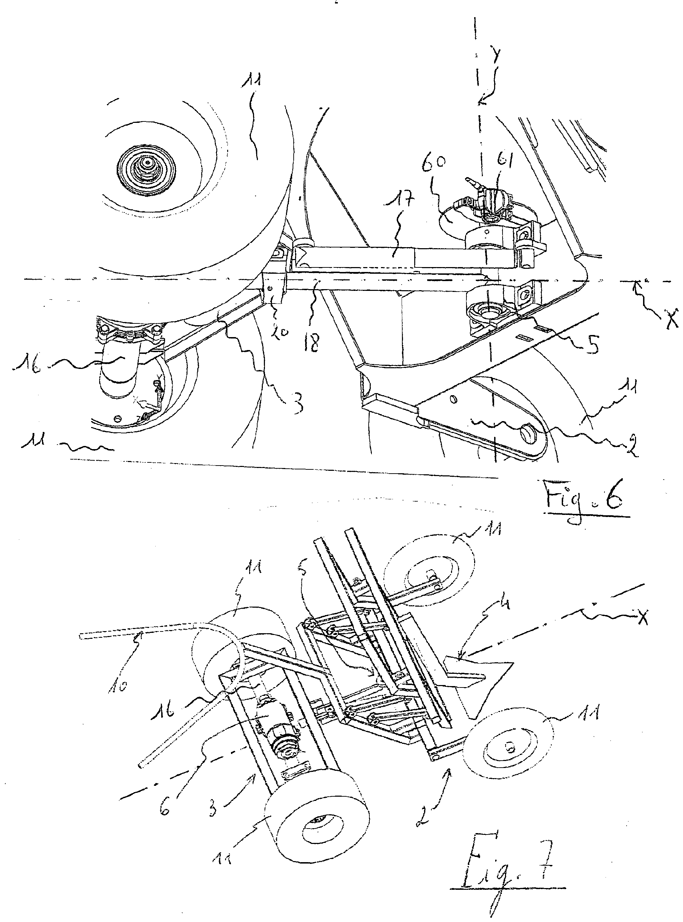

Plus précisément, le châssis porteur 2 est notamment apte à recevoir des dispositifs 4 de maintien de charge ou des outils fixes ou mobiles par rapport audit châssis porteur 2. Le châssis porteur 2 porte ici un système de chargement pouvant passer d'une position de chargement au sol à une position relevée pour permettre le déplacement du véhicule chargé tel que décrit dans la demande de brevet numéro FR1160713 publiée sous le numéro FR2982828. En variante, le dispositif 4 prend la forme d'un système sélectionné notamment parmi: un système de levage de benne, des fourches (cf Figure 4), une bineuse (cf Figure 7), un mât élévateur à fourches, des outils de travail du sol, des outils de traitement de surface, des balayeuses ou des systèmes fixés sur le châssis porteur tels qu'une benne, un plateau, une cuve, une pompe, ou une génératrice.

Le châssis porteur 2 présente ici une forme en U formant un essieu ayant des bras latéraux en regard l'un de l'autre portant chacun une roue 11. En variante, le châssis porteur 2 peut prendre différentes formes adaptées à recevoir le dispositif 4 de maintien de charge ou un outil, fixe ou mobile par rapport au châssis porteur 2. Comme montré sur la Figure 5, le châssis porteur 2 peut ainsi comporter un double essieu rigide. Les roues 11 du châssis porteur 2 ne sont a priori pas motrices dans la mesure où ce sont les roues 11 du châssis moteur 3 qui assurent la propulsion du véhicule. En variante, les roues 11 du châssis porteur 2 sont également motrices en plus des roues 11 du châssis moteur. Le châssis porteur 2 comporte au moins deux roues 11.

Le châssis moteur 3 assure la propulsion du véhicule au moyen d'un moteur 6 thermique ou électrique entraînant les roues 11 portées. Le châssis moteur 3 comporte au moins deux roues 11 motrices. En l'occurrence, le châssis moteur 3 comporte un essieu 16 portant à chaque extrémité deux roues motrices 11.

L'essieu 16 est de préférence équipé d'un dispositif de différentiel permettant pendant les changements de trajectoire ou suivant des trajectoires courbes du véhicule 1 que la roue 11 extérieur à l'arc de courbe du châssis moteur 3 de tourner plus rapidement que la roue 11 intérieur. Le différentiel permet également de manoeuvrer plus facilement le véhicule à l'arrêt, les roues 11 châssis moteur 3 tournant simultanément en sens inverse lors d'un changement de direction du châssis porteur 2.

Les roues 11 du châssis moteur 3 peuvent être équipées d'un système de roue libre permettant lors d'un changement de direction à la roue 11 extérieur du châssis moteur 3 de tourner plus rapidement que la roue 11 intérieur. Le système de roue libre peut également être intégré à l'axe de transmission.

Le bras 18 installé entre le châssis porteur 2 et le châssis moteur 3 permet au châssis porteur 2 de se déplacer par rapport au châssis moteur 3 autour d'un axe de rotation Y. L'axe de rotation Y de l'articulation 5 est sensiblement vertical. En variante, l'axe de rotation Y est légèrement incliné d'un angle compris en 3° et 10° par rapport à la verticale vers l'axe X d'oscillation dans un plan vertical, longitudinal et médian au véhicule. Cette inclinaison de l'axe de rotation Y favorise l'alignement des deux châssis 2, 3 dans un plan longitudinal.

Le bras 18 installé entre le châssis porteur 2 et le châssis moteur 3 permet au châssis porteur 2 de se déplacer par rapport au châssis moteur 3 autour d'un axe X horizontal. L'axe de rotation X horizontal du système d'oscillation 20 est sensiblement horizontal et sensiblement perpendiculaire à l'axe des roues 11 du châssis moteur 3 recevant dans ce cas le système d'oscillation 20 du véhicule 1. Sur les figures 1, 3a, 3b, 4, 5, 6 et 7 , le système d'oscillation 20 est sur le châssis moteur 3. En variante le système d'oscillation 20 pourrait être situé sur le châssis porteur 2 et le système d'articulation 5 serait alors sur le châssis moteur 3, les deux châssis 2, 3 étant toujours reliés par le bras 18.

Le guidage du véhicule est effectué en dirigeant le châssis porteur 2 par l'intermédiaire de l'élément de guidage 10 sans action directe sur le châssis moteur 3. En l'occurrence, l'élément de guidage 10 comporte deux tiges 101, 102 destinées à être manoeuvrer par l'opérateur pour assurer le guidage du véhicule, lesdites tiges 101, 102 étant reliées entre elles par une portion courbe fixée au châssis porteur 2. Un système de câblage ou de télécommande 13 entre le châssis porteur 2 et le châssis moteur 3 permet le contrôle de la motorisation du véhicule 1 depuis l'élément de guidage 10. A cet effet, un bras 18 s'étendant entre le châssis porteur 2 et le châssis moteur 3 comporte une ouverture traversante pour permettre le passage des câbles de commande à l'intérieur dudit bras 18.

Le plus couramment, l'opérateur se positionne derrière le véhicule 1 et suit le véhicule 1 en déplacement. Le châssis moteur 3 se trouve alors entre le châssis porteur 2 et l'opérateur. Toutefois, l'opérateur peut se positionner également devant le véhicule tout en le guidant à l'aide d'un timon ou d'un guidon dans le cas d'un intérêt d'un positionnement de l'opérateur devant le chargement. L'opérateur peut également se positionner sur un côté du véhicule. A cet effet, comme montré sur la Figure 4, le véhicule 1 comporte un système de réglage 9 permettant le positionnement de l'élément de guidage 10 tel que l'opérateur peut se positionner au sol pour guider le véhicule indifféremment derrière, devant ou sur le côté du véhicule. Ce système de réglage 9 peut consister par exemple en un bras 103 articulé par rapport au châssis porteur 2 autour d'un axe vertical relié à l'élément de guidage 10 permettant à l'élément de guidage 10 de tourner autour du véhicule 1.

La direction du véhicule dépend de l'angle entre le châssis porteur 2 et le châssis moteur 3. Cet angle est donné par le guidage du châssis porteur 2 par la force de l'opérateur appliquée à l'élément de guidage 10 pour son orientation. Dans le cas d'un guidage manuel du châssis porteur 2, l'articulation 5 est de préférence équipée d'un amortisseur de direction 17 permettant de limiter les à-coups provoqués par la rencontre d'un obstacle. L'amortisseur de direction 17 est situé dans un plan sensiblement perpendiculaire à l'axe de rotation Y. L'amortisseur 17 de direction est de préférence apte à limiter le débattement de articulation 5 dans les deux sens de rotation du châssis porteur 2 par rapport au châssis moteur 3. En l'occurrence, l'amortisseur 17 est formé par un vérin au gaz ayant une extrémité reliée au châssis porteur 2 et une extrémité reliée au bras 18 s'étendant entre les deux châssis 2; 3 et portant l'articulation. Les extrémités de ce vérin sont reliées au châssis porteur 2 et au bras 18 par l'intermédiaire de liaisons pivot autour d'axes verticaux.

Sur le véhicule représenté en Figure 6, un système de frein 61 à disque 60 vient bloquer l'articulation 5 ou limiter le couple du mouvement d'articulation des deux châssis 2, 3 autour de l'axe Y d'articulation. Le système de différentiel ou de roues libres pouvant équiper l'essieu 16 ou les roues 11 du châssis moteur 3 rendent le véhicule particulièrement instable dans les terrains irréguliers, le véhicule 1 ayant tendance à prendre une direction indésirable lorsqu'une roue 11 du châssis porteur 2 rencontre un obstacle ou des irrégularités sur le sol. Le système de frein permet en bloquant l'articulation (5) de maintenir la direction et de facilité le guidage du véhicule 1. Le système de frein peut également être réalisé par un système mécanique ayant le même effet entre l'un des deux châssis 2, 3 et le bras 18 par exemple un vérin équipé par un système de bypass qui permet de verrouiller l'articulation 5. De même des systèmes électromécaniques peuvent convenir pour verrouiller l'articulation 5.

Alternativement, comme représenté en traits discontinus sur la Figure 1, l'articulation 5 est équipée d'un élément 51 de mise en mouvement de l'articulation 5 des deux châssis 2, 3 contrôlé par un élément 52 de contrôle porté par l'élément de guidage 10. L'élément de guidage 10 ne sert alors plus de guidage direct par l'effort de l'opérateur mais supporte l'élément de contrôle 52 de mise en mouvement de l'articulation 5. L'élément 51 de mise en mouvement de l'articulation 5 peut consister notamment en un des éléments mécaniques suivants: un système à vérin électrique ou hydraulique, un système de chaînes et pignons, un système à crémaillère, ou un moteur électrique ou hydraulique monté sur l'articulation, ou tout autre élément adapté à actionner l'articulation 5. Dans ce cas, l'élément 51 de mise en mouvement est positionné en lieu et place de l'amortisseur 17. L'élément 51 peut également jouer un rôle d'amortisseur de direction.

Sur les véhicules représentés sur les Figures 1, 3, 4, 5 et 7 l'articulation 5 entre le châssis porteur 2 et le bras 18 est formée par un système à pivot comportant une partie formant une chape et un axe reliés au châssis porteur 2 coopérant avec le bras 18, ou inversement le bras 18 formant une chape et un axe relié à une chape appartenant au châssis porteur 2.

De préférence, la liaison pivot d'articulation 5 entre un bras 18 et le châssis porteur 2 est située sensiblement à équidistance entre l'axe des roues 11 du châssis porteur 2 avant et l'axe des roues 11 du châssis moteur 3. Si les roues 11 du châssis porteur 2 ont la même voie que les roues 11 du châssis moteur 3, sur une même trajectoire en marche avant, les roues 11 du châssis moteur 3 passent dans la même voie que les roues 11 du châssis porteur 2 , et inversement en marche arrière.

Sur le détail du véhicule en figue 6, l'axe pivot de l'articulation fait parti du bras 18 coopérant dans un système de chapes constitué de deux palliés reliés au châssis porteur 2.

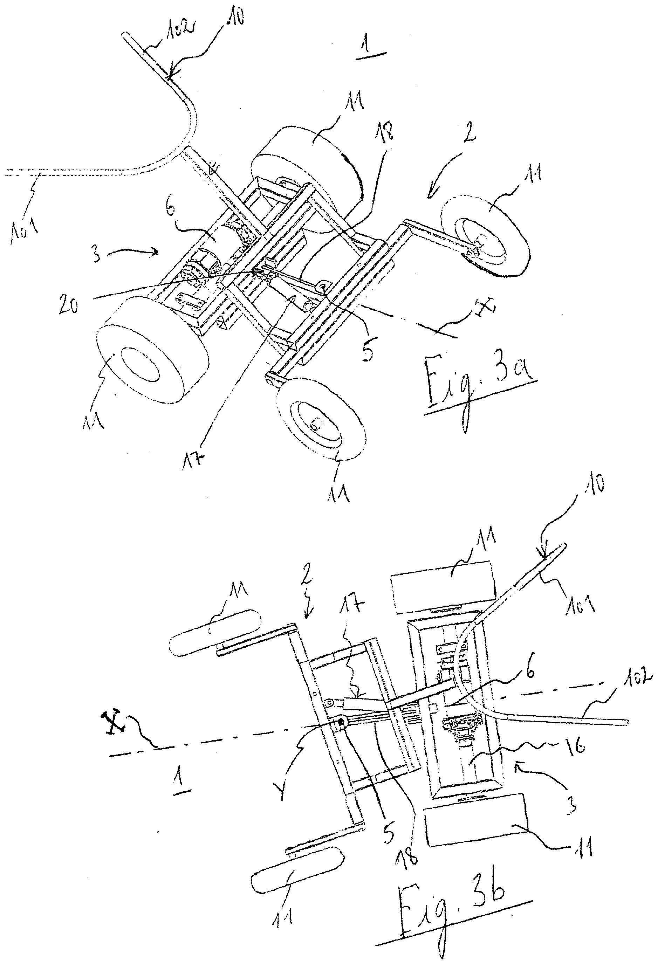

Comme visible sur la Figure 3a, pour un type de véhicule à quatre roues ou plus, le véhicule 1 est avantageusement équipé d'un système d'oscillation 20 autorisant la rotation d'un châssis 2, 3 par rapport à l'autre autour d'un axe X de rotation horizontal s'étendant suivant un axe longitudinal du véhicule. Un tel système d'oscillation 20 permet aux quatre roues 11 de rester en contact permanent avec le sol dans le cas de terrains irréguliers non parfaitement plat ou en cas d'obstacle.

Sur le véhicule représenté sur les Figures 1, 3a, 3b, 4, 5, 6 et 7, le système d'articulation 5 est situé du coté du châssis porteur 2 et le système d'oscillation est situé du coté du châssis moteur 3. Les systèmes d'oscillation 20 et d'articulation 5 peuvent être permutés. Dans ce cas le système d'oscillation 20 est situé du coté du châssis porteur 2, et le système d'articulation 5 est situé du coté du châssis moteur 3.

De préférence, un système de butée limite dans un plan horizontal l'oscillation des deux châssis 2, 3 l'un par rapport à l'autre dans les deux sens de déplacement autour de l'axe X.

Alternativement, comme montré sur la Figure 2, les deux châssis 2 et 3 sont reliés entre eux par un système 21 de biellettes assurant une articulation autour de l'axe Y passant par des centres de rotation instantanés situés dans le prolongement des biellettes. En l'occurrence, le système 21 de biellettes est formé par deux ensembles de deux biellettes 23 disposés en V, l'angle du V étant disposé du côté du châssis porteur 2. Chaque biellette 23 présente des extrémités coopérant avec des chapes 24 en forme de U reliées d'une part au châssis porteur 2 et d'autre part au châssis moteur 3 via un axe d'orientation verticale (non représenté). Le centre instantané de rotation se trouvant vers l'avant du véhicule 1. Ce système permet d'avoir un rayon de braquage plus court.

Dans ce mode de réalisation, le système d'oscillation 20 est formé par une platine non représentée portant une série de chapes 24 reliées aux biellettes 23. Cette platine montée rotative autour d'un axe longitudinal X du véhicule 1 est portée par le châssis porteur 2 ou le châssis moteur 3.

En remplacement ou en complément du système d'oscillation 20, le châssis porteur 2 ou le châssis moteur 3 sont équipés de bras oscillants l'un par rapport à l'autre afin de permettre le contact des quatre roues 11 avec le sol. Les deux bras sont reliés par un système de différentiel leur permettant d'osciller l'un par rapport à l'autre.

Un système de verrouillage de l'articulation 5 quand le véhicule est arrêté peut être intégré au système d'amortisseur ou indépendant pour éviter la mise en portefeuille à l'arrêt quand l'opérateur lâche le véhicule 1.

Les termes "horizontal" et "vertical" sont entendus par rapport à un véhicule 1 selon l'invention fonctionnant dans des conditions normales d'utilisation sur un sol sensiblement horizontal. L'axe longitudinal du véhicule est déterminé lorsque le châssis avant est aligné avec le châssis arrière.

Bien évidemment l'homme du métier peut modifier la configuration des véhicules de transport décrits dans les figures sans sortir du cadre de l'invention défini par les revendications annexées. En particulier, il est entendu que certaines caractéristiques présentées dans un mode de réalisation pourront être adaptées à un autre mode de réalisation sans sortir du cadre de l'invention défini par les revendications annexées.

## Revendications

1. Véhicule (1) de transport destiné à être guidé par un opérateur au sol comportant :
- un châssis porteur (2) comportant au moins deux roues (11) situé à l'avant du véhicule apte à recevoir un dispositif (4) de maintien de charge ou un outil, fixe ou mobile par rapport au châssis porteur (2),
- un châssis moteur (3) comportant au moins deux roues (11) situé à l'arrière du véhicule assurant la propulsion du véhicule,
le véhicule étant **caractérisé en ce qu'**il comporte en outre :
- un bras (18) installé entre le châssis porteur (2) et le châssis moteur (3) permettant au châssis porteur (2) et au châssis moteur (3) de se déplacer l'un par rapport à l'autre autour d'un axe (Y) de rotation dit axe d'articulation, sensiblement vertical ou légèrement incliné via une articulation (5) et, autour d'un axe (X) de rotation dit axe d'oscillation sensiblement horizontal et sensiblement perpendiculaire à l'axe des roues (11) du châssis moteur (3) recevant un système d'oscillation (20),
- un élément de guidage (10) fixé au châssis porteur (2) permettant à un opérateur au sol de guider le véhicule, le guidage du véhicule étant effectué en dirigeant le châssis porteur (2) par l'intermédiaire de l'élément de guidage (10) sans action directe sur le châssis moteur (3) et **en ce qu'**il comporte en outre un amortisseur (17) des efforts inopinés et indésirables mettant en mouvement les châssis autour de l'axe de rotation (Y) de l'articulation (5),
- et **en ce qu'**un essieu moteur (16) est équipé d'un système permettant à chacune des roues (11) portées par l'essieu moteur (16) d'avancer à des vitesses différentes voire d'être en contre-rotation.

2. Véhicule selon la revendication 1, **caractérisé en ce que** l'axe (Y) d'articulation est incliné par rapport à la verticale vers à l'axe (X) d'oscillation dans un plan vertical, longitudinal et médian du véhicule.

3. Véhicule selon la revendication 1 ou 2, le système permettant à chacune des roues (11) portées par l'essieu moteur (16) d'avancer à des vitesses différentes voire d'être en contre-rotation est un différentiel situé dans l'essieu moteur (16) ou, un système à roue libre situé dans les roues (11) ou dans l'essieu moteur (16).

4. Véhicule selon l'une des revendications 1 à 3, **caractérisé en ce qu'**un système de frein vient bloquer ou limiter le couple du mouvement d'articulation des deux châssis (2, 3) autour de l'axe (Y) d'articulation.

5. Véhicule selon l'une des revendications 1 à 4, **caractérisé en ce que** l'amortisseur (17) est apte à limiter le débattement de l'articulation (5) dans les deux sens de rotation des deux châssis (2, 3) l'un par rapport à l'autre autour de l'axe (Y) d'articulation.

6. Véhicule selon la revendication 1 à 5, **caractérisé en ce qu'**il comporte un système de butée limitant dans un plan horizontal l'oscillation des deux châssis (2, 3) l'un par rapport à l'autre dans les deux sens de déplacement autour de l'axe (X) d'oscillation.

7. Véhicule selon l'une des revendications 1 à 6, **caractérisé en ce que** le système d'oscillation (20) est situé sur le châssis porteur (2) et le système d'articulation sur le châssis moteur (3). Les deux châssis (2, 3) étant reliés par un bras (18) permettant à la fois l'articulation et l'oscillation.

8. Véhicule selon l'une des revendications 1 à 7, **caractérisé en ce que** le châssis porteur (2) comporte un essieu motorisé ou des roues motorisées en complément de la motricité des roues (11) du châssis moteur (3).

9. Véhicule selon l'une des revendications 1 à 8, **caractérisé en ce que** l'articulation (5) entre le bras (18) et l'un des châssis (2, 3) autour de l'axe (Y) d'articulation, est formée par un système à pivot comportant une partie formant un axe reliée à une extrémité du bras (18) coopérant avec une partie formant une chape reliée à un des châssis (2, 3), ou inversement.

10. Véhicule selon l'une des revendications 1 à 9, **caractérisé en ce que** l'articulation (5) est formée par au moins deux biellettes (23) liées par leurs extrémités au châssis porteur (2) et au châssis moteur (3) en rotation autour d'axes verticaux.

11. Véhicule selon la revendication 10, **caractérisé en ce que**, le véhicule (1) comporte un système de deux bras oscillants l'un par rapport à l'autre reliés à un système de différentiel, ce système équipant le châssis porteur (2) ou le châssis moteur (3) afin de maintenir les roues du véhicule (1) au sol.

12. Véhicule selon l'une des revendications 1 à 11, **caractérisé en ce que** l'élément de guidage (10) fixé au châssis porteur (2) comporte un système de réglage permettant de positionner l'élément de guidage (10) indifféremment derrière, devant ou sur le côté du véhicule (1).

13. Véhicule selon l'une des revendications 1 à 12, **caractérisé en ce qu'**un système de câblage (13) ou de télécommande entre le châssis porteur (2) et le châssis moteur (3) permet le contrôle d'un moteur du châssis moteur (3) depuis l'élément de guidage (10).

14. Véhicule selon l'une des revendications 1 à 13, **caractérisé en ce que** l'articulation (5) est équipée d'un élément (51) de mise en mouvement de l'articulation des deux châssis (2, 3) contrôlé par un élément (52) de contrôle porté par l'élément de guidage (10).

15. Véhicule selon l'une des revendications 1 à 14, **caractérisé en ce qu'**il comporte un ou plusieurs marchepieds fixés au châssis moteur (3) pour que l'opérateur puisse alternativement passer d'une position au sol à une position embarquée sur le véhicule de transport (1).

## Patentansprüche

1. Transportfahrzeug (1), das von einem Bodenbetreiber geführt werden soll, mit:
- einem an der Vorderseite des Fahrzeugs angeordneten, mit mindestens zwei Rädern (11) versehenen Tragrahmen (2), der zur Aufnahme einer Lasthaltevorrichtung (4) oder eines Werkzeuges fähig ist, welche oder welches relativ zu dem Tragrahmen (2) unbeweglich oder beweglich angeordnet ist,
- einem an der Rückseite des Fahrzeugs angeordneten, mit mindestens zwei Rädern (11) versehenen Antriebsrahmen (3) für den Antrieb des Fahrzeugs,
wobei das Fahrzeug **dadurch gekennzeichnet ist, dass** es ferner umfasst:
- einen zwischen dem Tragrahmen (2) und dem Antriebsrahmen (3) vorgesehenen Arm (18) für die Bewegung des Tragrahmens (2) und des Antriebsrahmens (3) relativ zueinander um eine im wesentlichen senkrecht oder leicht schräg über ein Gelenk (5) angeordnete Drehachse (Y), sogenannte Artikulationsachse, und um eine im wesentlichen horizontal und im wesentlichen senkrecht zur Achse der Räder (11) des Antriebsrahmens (3) angeordnete Drehachse (X), sogenannt Oszillationsachse, die ein Oszillationssystem (20) aufnimmt,
- ein an dem Tragrahmen (2) befestigtes Führungselement (10), das es einem Bodenbediener ermöglicht, das Fahrzeug zu führen, wobei das Fahrzeug durch das Leiten des Tragrahmens (2) über das Führungselement (10) ohne direkte Einwirkung auf den Antriebsrahmen (3) geführt wird und, dass es ferner einen Dämpfer (17) für unerwünschte und unerwartete Kräfte aufweist, die die Rahmen um die Drehachse (Y) des Gelenks (5) antreiben,
- und dass eine Antriebsachse (16) mit einem System für die Vorwärtsbewegung jedes der von der Antriebsachse (16) getragenen Räder (11) mit unterschiedlichen Geschwindigkeiten oder sogar deren Gegendrehung ausgestattet ist.

2. Fahrzeug nach Anspruch 1, **dadurch gekennzeichnet, dass** die Artikulationsachse (Y) gegenüber der Senkrechten zur Oszillationsachse (X) in einer Vertikal-, Längs- und Mittelebene des Fahrzeugs geneigt ist.

3. Fahrzeug nach Anspruch 1 oder 2, wobei das System für die Vorwärtsbewegung jedes der von der Antriebsachse (16) getragenen Räder (11) mit unterschiedlichen Geschwindigkeiten oder sogar deren Gegendrehung ein in der Antriebsachse angeordnetes Differentialgetriebe (16) oder ein in den Rädern (11) oder in der Antriebsachse (16) angeordnetes Freilaufsystem ist.

4. Fahrzeug nach einem der Ansprüche 1 bis 3, **dadurch gekennzeichnet, dass** ein Bremssystem das Drehmoment der Artikulationsbewegung beider Rahmen (2, 3) um die Artikulationsachse (Y) sperrt oder begrenzt.

5. Fahrzeug nach einem der Ansprüche 1 bis 4, **dadurch gekennzeichnet, dass** der Dämpfer (17) dazu ausgelegt ist, die Bewegung des Gelenks (5) in beiden Drehrichtungen beider Rahmen (2, 3) relativ zu einander um die Artikulationsachse (Y) zu begrenzen.

6. Fahrzeug nach einem der Ansprüche 1 bis 5, **dadurch gekennzeichnet, dass** es ein Anschlagsystem umfasst, das in einer horizontalen Ebene die Oszillation beider Rahmen (2, 3) relativ zu einander in beiden Verschiebungsrichtungen um die Oszillationsachse (X) begrenzt.

7. Fahrzeug nach einem der Ansprüche 1 bis 6, **dadurch gekennzeichnet, dass** das Oszillationssystem (20) am Tragrahmen (2) und das Artikulationssystem am Antriebsrahmen (3) angeordnet ist, wobei beide Rahmen (2, 3) durch einen Arm (18) für Artikulations- und Oszillationsbewegungen miteinander verbunden sind.

8. Fahrzeug nach einem der Ansprüche 1 bis 7, **dadurch gekennzeichnet, dass** der Tragrahmen (2) zusätzlich zur Motorisierung der Räder (11) des Antriebsrahmens (3) eine motorisierte Achse oder motorisierte Räder aufweist.

9. Fahrzeug nach einem der Ansprüche 1 bis 8, **dadurch gekennzeichnet, dass** das zwischen dem Arm (18) und einem der Rahmen (2, 3) angeordnete Gelenk (5) für die Artikulationsbewegung um die Artikulationsachse (Y) durch ein Schwenksystem gebildet ist, das einen mit einem Ende des Arms (18) verbundenen Achsenteil aufweist, der mit einem mit einem der Rahmen (2, 3) verbundenen Gabelteil zusammenwirkt, oder umgekehrt.

10. Fahrzeug nach einem der Ansprüche 1 bis 9, **dadurch gekennzeichnet, dass** das Gelenk (5) durch mindestens zwei an ihren Enden mit dem Tragrahmen (2) und dem Antriebsrahmen (3) verbundene Verbindungsstangen (23) in Rotation um vertikale Achsen gebildet wird.

11. Fahrzeug nach Anspruch 10, **dadurch gekennzeichnet, dass** das Fahrzeug (1) ein System von zwei relativ zu einander oszillierenden und mit einem Differentialsystem verbundenen Armen umfasst, wobei das Armsystem am Tragrahmen (2) oder Antriebsrahmen (3) vorgesehen ist, um die Räder des Fahrzeugs (1) auf dem Boden zu halten.

12. Fahrzeug nach einem der Ansprüche 1 bis 11, **dadurch gekennzeichnet, dass** das am Tragrahmen (2) befestigte Führungselement (10) ein Verstellsystem zum Positionieren des Führungselements (10) unterschiedslos hinter oder vor dem Fahrzeug (1) oder an dessen Seite aufweist.

13. Fahrzeug nach einem der Ansprüche 1 bis 12, **dadurch gekennzeichnet, dass** ein Verdrahtungssystem (13) oder ein Fernsteuersystem zwischen dem Tragrahmen (2) und dem Antriebsrahmen (3) die Steuerung eines Motors des Antriebsrahmen (3) von dem Führungselement (10) ermöglicht.

14. Fahrzeug nach einem der Ansprüche 1 bis 13, **dadurch gekennzeichnet, dass** das Gelenk (5) mit einem von einem von dem Führungselement (10) getragenen Steuerelement (52) gesteuerten Element (51) für die Artikulationsbewegung beider Rahmen (2, 3) versehen ist.

15. Fahrzeug nach einem der Ansprüche 1 bis 14, **dadurch gekennzeichnet, dass** es ein oder mehrere an dem Antriebsrahmen (3) befestigten Trittbretter aufweist, so dass der Bediener alternativ von einer Stellung am Boden zu einer Stellung am Transportfahrzeug (1) gehen kann.

## Claims

1. A transport vehicle (1) intended to be guided by an ground operator, comprising:
- a supporting frame (2) provided with at least two wheels (11), located at the front of the vehicle, and adapted to receive a load-holding device (4) or a tool, fixed or movable relative to the supporting frame (2),
- a driving frame (3) provided with at least two wheels (11), located at the rear of the vehicle, and ensuring the propulsion of the vehicle,
the vehicle being **characterized in that** it further comprises:
- an arm (18) provided between the supporting frame (2) and the driving frame (3) and enabling the supporting frame (2) and the driving frame (3) to move relative to one another about an axis of rotation (Y), referred to as the axis of articulation, substantially vertical or slightly inclined via an hinge (5) and, about an axis of rotation (X), referred to as the axis of oscillation, substantially horizontal and substantially perpendicular to the axis of the wheels (11) of the driving frame (3), which receives an oscillation system (20),
- a guiding member (10) fixed to the supporting frame (2) and enabling a ground operator to guide the vehicle, the vehicle being guided by directing the supporting frame (2) via the guiding member (10) without any direct action onto the driving frame (3), and **in that** it furthermore comprises a damper (17) for unwanted and unexpected forces driving the frames about the axis of rotation (Y) of the hinge (5),
- and **in that** a driving axle (16) is equipped with a system enabling each of the wheels (11) supported by the driving axle (16) to advance at different speeds or even to counter-rotate.

2. The vehicle according to claim 1, **characterized in that** the axis of articulation (Y) is inclined with respect to the vertical towards the axis of oscillating (X) in a vertical, longitudinal and median plane of the vehicle.

3. The vehicle according to claim 1 or 2, the system enabling each of the wheels (11) supported by the driving axle (16) to advance at different speeds or even to counter-rotate is a differential gear located in the driving axle (16) or a freewheel system located in the wheels (11) or in the driving axle (16).

4. The vehicle according to any one of the claims 1 to 3, **characterized in that** a brake system inhibits or limits the torque of the articulation movement of both frames (2, 3) about the axis of articulation (Y).

5. The vehicle according to any one of the claims 1 to 4, **characterized in that** the damper (17) is adapted to limit the movement of the hinge (5) in both directions of rotation of both frames (2, 3) with respect to one other about the axis of articulation (Y).

6. The vehicle according to any one of the claims 1 to 5, **characterized in that** it comprises a stop system limiting, in a horizontal plane, the oscillation of both frames (2, 3) with respect to one other in both directions of displacement about the axis of oscillation (X).

7. The vehicle according to any one of the claims 1 to 6, **characterized in that** the oscillation system (20) is located on the supporting frame (2) and the articulation system is located on the driving frame (3), both frames (2, 3) being connected to one another by means of an arm (18) enabling both articulation and oscillation.

8. The vehicle according to any one of the claims 1 to 7, **characterized in that** the supporting frame (2) comprises a motorized axle or motorized wheels in addition to the motorization of the wheels (11) of the driving frame (3).

9. The vehicle according to any one of the claims 1 to 8, **characterized in that** the hinge (5), located between the arm (18) and one of the frames (2, 3) and enabling the articulation about the axis of articulation (Y), is formed by a pivot system comprising an axis part connected to one end of the arm (18) and cooperating with a clevis part connected to one of the frames (2, 3) or vice versa.

10. The vehicle according to any one of the claims 1 to 9, **characterized in that** the hinge (5) is formed by at least two connecting rods (23) connected at their ends to the supporting frame (2) and to the driving frame (3) in rotation about vertical axes.

11. The vehicle according to claim 10, **characterized in that** the vehicle (1) comprises a system of two arms oscillating relative to one another and connected to a differential system, said arm system being provided on the supporting frame (2) or driving frame (3) in order to hold the wheels of the vehicle (1) on the ground.

12. The vehicle according to any one of the claims 1 to 11, **characterized in that** the guiding member (10) fixed to the supporting frame (2) comprises an adjustment system for positioning the guiding member (10) indifferently at the back of, in front of or on a side of the vehicle (1).

13. The vehicle according to any one of the claims 1 to 12, **characterized in that** a wiring system (13) or a remote control system between the supporting frame (2) and the driving frame (3) enables the control of a motor of the driving frame (3) from the guiding member (10).

14. The vehicle according to any one of the claims 1 to 13, **characterized in that** the hinge (5) is provided with a member (51) intended to move the articulation of both frames (2, 3) and controlled by a control member (52) supported by the guiding member (10).

15. The vehicle according to any one of the claims 1 to 14, **characterized in that** it comprises one or more footboards fixed to the driving frame (3) so that the operator can alternatively pass from a ground position to an on-board position on the transport vehicle (1).
